# EUROPÄISCHE PATENTSCHRIFT

(11) **EP 2 952 291 B1**
(45) Veröffentlichungstag und Bekanntmachung des Hinweises auf die Patenterteilung: **26.04.2017**
(21) Anmeldenummer: 14171254.7
(22) Anmeldetag: 05.06.2014
(51) Int. Cl.: B23Q 7/04, B25J 15/00, B23Q 7/10

(54) **Verfahren zum Handhaben von prismatischen Werkstücken mit einem rhomboidförmigen Querschnitt auf einer Werkzeugmaschine**
Method for handling of prismatic workpieces with a rhomboid-shaped cross-section on a machine tool
Procédé de manipulation de pièces à usiner prismatiques présentant une section rhomboïdale sur une machine-outil

(43) Veröffentlichungstag der Anmeldung: 09.12.2015
(73) Patentinhaber: Liechti Engineering AG, 3550 Langnau im Emmental (CH)
(72) Erfinder: Scheidegger, Andreas, 3510 Konolfingen (CH); Haueter, Ernst, 3533 Bowil (CH)
(74) Vertreter: Fenner, Seraina

(56) Entgegenhaltungen:
- EP-A1- 0 185 286
- EP-A1- 2 409 811
- DD-A1- 235 839
- JP-A- S6 445 589
- JP-A- S62 185 629

## Beschreibung

Die Erfindung betrifft ein Verfahren zum Handhaben von prismatischen Werkstücken mit einem rhomboidförmigen Querschnitt auf einer Werkzeugmaschine mit mindestens einem Spannfutter für die Werkstücke, mit einem Werkstückmagazin und mit einem Greifer für die Werkstücke, wobei das Spannfutter vier konvex gewölbte Kontaktflächen für die Werkstücke hat, die paarweise aufeinander zu und voneinander weg bewegbar sind.

Viele Werkstücke werden in Bearbeitungszentren aus abgeschnittenem Profilmaterial gefertigt, beispielsweise gefräst. Das Profilmaterial hat sehr häufig einen rhomboidförmigen Querschnitt. Darunter sind Parallelogramme einschliesslich Rechteck und Quadrat zu verstehen. In der Werkzeugmaschine werden die Werkstücke an einem oder beiden Enden mit Spannfuttern gehalten. Um Kosten einzusparen, werden die Zuführung zur Werkzeugmaschine, das Spannen des Werkstücks, die Bearbeitung und das Wegbringen des bearbeiteten Werkstücks automatisiert. Die Werkstücke werden in einem Werkstückmagazin geordnet bereitgestellt. Mit einem Greifer, welcher an einem Roboter oder in der Spindel der Werkzeugmaschine montiert ist, werden die Werkstücke ergriffen und zur Spannstelle der Werkzeugmaschine gebracht, wo sie eingespannt werden. Nach der Bearbeitung werden die fertigen Teile mit dem gleichen oder einem anderen Greifer von der Spannstelle in ein Fertigteilmagazin gebracht. Die Fertigteilspeicherung kann ungeordnet erfolgen.

Die Form und Länge der Werkstücke kann stark variieren und die zu fertigenden Losgrössen sind verhältnismässig klein. Herkömmliche Spannsysteme spannen an einer definierten Prägung mit flachen Spannbacken direkt auf dem Werkstück oder mit eckig ausgeführten Formbacken an zwei gegenüber liegenden Ecken des Werkstücks. Die Flachspannung hat den Nachteil, dass rhombische Werkstücke nicht einfach zentrieren lassen und zudem schräg verformt werden können, da die Auflageflächen nicht symmetrisch sind.

Diesen Nachteil hebt die so genannte übereck Spannung auf, bei welcher zwei diagonal gegenüberliegende Kanten des Werkstücks durch ein Spannfutter mit einem einzigen Freiheitsgrad gespannt werden. Hier ist es jedoch von Nachteil, dass die Auflageflächen der Spannbacken insbesondere den Eckwinkeln des Werkstücks entsprechen müssen. Dies hat zur Folge, dass bei einer Vielzahl von Werkstücken mit unterschiedlichen Proportionen, Abmessungen und Eckwinkeln eine Vielzahl unterschiedlicher Spannbacken notwendig sind. Dabei muss der Eckwinkel der Spannbacke demjenigen des Werkstücks entsprechen und die Orientierung der Backe hängt von den Abmessungen des Querschnitts des Werkstücks ab.

Das Dokument DD235839A1 zeigt, wie die Notwendigkeit zahlreicher angepasster Eckstücke beim übereck Spannen vermieden werden kann. Beschrieben sind Spannbacken für Futter vorzugsweise zur Verwendung an Drehmaschinen zum Spannen rhombischer Werkstücke. Im Futterkörper eines Zweibackenfutters sind zwei Grundbacken mit je einer Aufsatzbacke angeordnet. Die Aufsatzbacken besitzen Wälzkörper, die durch eine Ringnut und dazugehörigem Sicherungsstift axial und vertikal lagegesichert sind. Die rhombischen Werkstücke werden an definierten Spannpunkten unter Berücksichtigung der jeweiligen Spannform und -kontur im Spanner aufgenommen und zentrieren sich zwangsweise.

Bei einem automatisierten Fertigungsprozess müssen prismatische Werkstücke mit einem rhomboidförmigen Querschnitt in einer definierten Orientierung dem Spannfutter übergeben werden.

Daraus ergibt sich als Aufgabe der vorliegenden Erfindung, ein Verfahren vorzuschlagen, bei dem die Werkstücke automatisch und in definierter Orientierung dem Spannfutter der Werkzeugmaschine übergeben werden.

Diese Aufgabe wird erfindungsgemäss dadurch gelöst, dass der Greifer vier konvex gewölbte Kontaktflächen für die Werkstücke hat, die paarweise aufeinander zu und voneinander weg bewegbar sind, wobei der Abstand und die Form bei einem Paar der Kontaktflächen des Greifers gleich sind wie der Abstand und die Form bei einem Paar der Kontaktflächen des Spannfutters, dass der Greifer ein Werkstück im Werkstückmagazin derart ergreift, dass sich zwischen jedem Paar der Kontaktflächen jeweils eine Längskante des Werkstücks befindet und dass der Greifer das ergriffene Werkstück aus dem Werkstückmagazin entnimmt und dem Spannfutter übergibt, derart, dass sich zwischen jedem Paar der Kontaktflächen des Spannfutters jeweils eine Längskante des Werkstücks befindet.

Diese erfindungsgemässe Lösung hat insbesondere den Vorteil, dass durch die Übereinstimmung der Geometrien des Spannfutters und des Greifers garantiert wird, dass die Werkstücke stets mit einer definierten Orientierung der Spannzange übergeben und dort automatisch zentriert werden. Ein weiterer Vorteil besteht darin, dass dank der genannten Geometrien eine Vielzahl von Werkstücken mit unterschiedlichen Abmessungen und Querschnittsformen gehandhabt werden können, ohne dass dazu angepasste Greif- und Spannelemente vorgesehen werden müssen.

Besondere Ausführungsarten der Erfindung sind in den abhängigen Ansprüchen definiert.

Ausführungsbeispiele der Erfindung werden nachstehend unter Bezugnahme auf die angefügten Zeichnungen beispielsweise näher beschrieben. Es zeigt
- Figur 1: einen Greifer mit einem darin aufgenommenen Werkstück;
- Figur 2: die Backen des Greifers in einem gegenüber Figur 1 vergrösserten Massstab;
- Figur 3: ein Ausführungsbeispiel eines Werkstückmagazins mit darin aufgenommenen Werkstücken in einer perspektivischen Ansicht;
- Figur 4: einen Aufriss eines anderen Ausführungsbeispiels eines Werkstückmagazins mit darin aufgenommenen Werkstücken und
- Figur 5: einen Ausschnitt einer perspektivischen Ansicht einer Werkzeugmaschine.

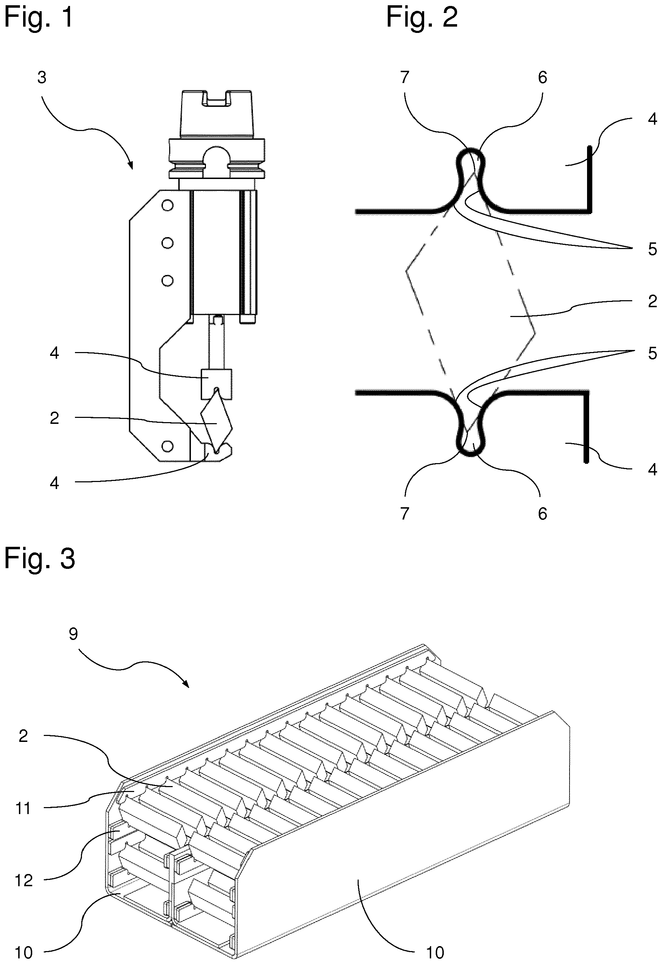

Figur 1 zeigt in einem Aufriss einen Greifer 3 mit einem darin aufgenommenen Werkstück 2. Für den Kontakt über Eck mit dem Werkstück 2 sind im Greifer zwei Backen 4 angeordnet, die in Figur 2 schematisch und gegenüber Figur 1 vergrössert dargestellt sind. In beiden Backen 4 sind konvex gewölbte Kontaktflächen 5 vorhanden, die das Werkstück 2 beim Greifen kontaktieren. Diese Kontaktflächen 5 sind bei beiden Backen 4 gleich und können als Segmente eines Kreiszylinders ausgebildet sein, aber auch eine andere gewölbte Form haben. Auch können die Kontaktflächen beispielsweise an Körpern vorhanden sein, die an Aufsatzbacken befestigt sind, wie eingangs anhand des Dokuments DD235839A1 beschrieben. In Figur 2 sind die Konturen eines Werkstücks 2 mit strichpunktierten Linien eingezeichnet. Eine Ausnehmung 6 bietet Raum für die Kante 7 des Werkstücks und gewährleistet, dass die Kontaktflächen 5 an den der Kante 5 benachbarten Flächen des Werkstücks 2 anliegen.

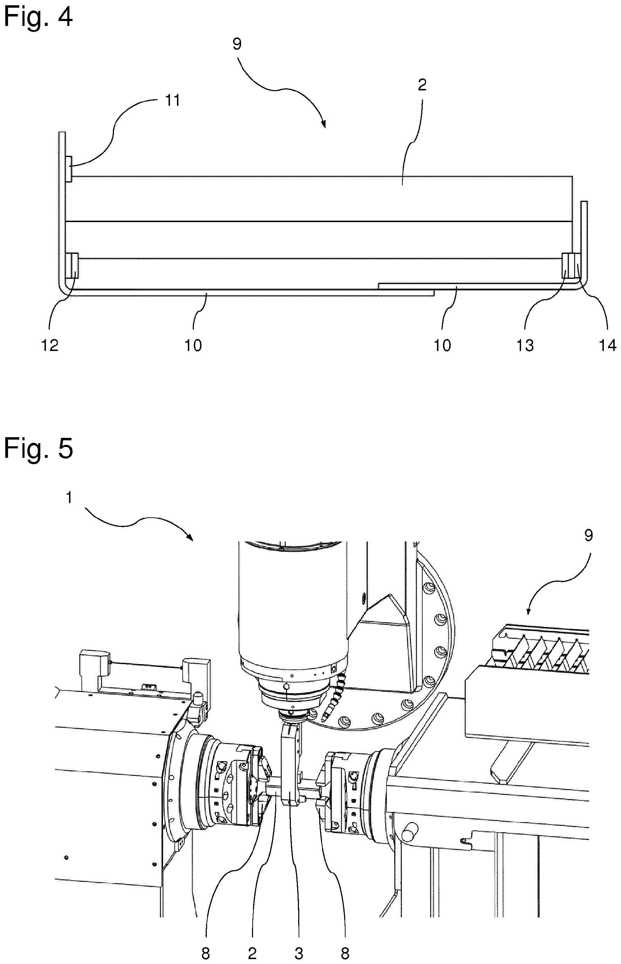

Figur 3 zeigt in einer perspektivischen Ansicht ein Ausführungsbeispiel eines Werkstückmagazins 9. Dieses Werkstückmagazin 9 fasst Werkstücke 2 auf zwei Ebenen in jeweils zwei Reihen. Je nach Art und Länge der Werkstücke 2 sind auch andere Ausführungsarten mit mehr als zwei Reihen und/oder mehr als zwei Ebenen, wie auch Ausführungsbeispiele mit einer einzigen Reihe und/oder einer einzigen Ebene denkbar. Figur 4 zeigt in einem Aufriss ein Werkstückmagazin 9 mit nur einer Reihe von relativ langen Werkstücken 2, die im Magazin in nur einer Ebene angeordnet sind. Jedes Werkstückmagazin 9 umfasst für jede Reihe von Werkstücken 2 zwei gegenüberliegende, abgewinkelte Tragteile 10, die vorzugsweise gegeneinander verstellbar sind, um das Magazin an die Länge der Werkstücke anzupassen. Links in den Figuren 3 und 4 sind untere Halteelemente 12 zu erkennen, auf denen die Werkstücke 2 im Bereich einer Stirnseite aufliegen. Auf der gleichen Seite sind auch obere Halteelemente 11 angeordnet, wie man in Figur 4 sieht, welche die Werkstücke 2 in der dargestellten Position halten. Rechts in Figur 4 sieht man ein abgestuftes Stützelement 13, auf dem das Werkstück 2 im Bereich seiner gegenüberliegenden Stirnseite aufliegt. Auf der gleichen Seite ist ein Anschlagteil 14 vorgesehen, das eine Verschiebung des Wertstücks 2 in Richtung seiner Längsachse begrenzt und damit verhindert, dass die Werkstücke 2 beim Transport des Werkstückmagazins aus den Halteelementen 11, 12 fallen können. Die Halteelemente 11 und 12 sowie vorzugsweise auch die Stützelemente 13 sind vorzugsweise gleich ausgebildet wie die Backen des Greifers 3 und des Spannfutters 8. Allerdings sind die oberen Halteelemente 11 und die unteren Halteelemente 12 so voneinander distanziert, dass die Werkstücke 2 mit einem Spiel dazwischen aufgenommen sind, welches es erlaubt, die Werkstücke beim Entnehmen aus dem Werkstückmagazin 9 zunächst um einige Millimeter quer zu ihrer Längsachse anzuheben. Nach diesem Anheben werden die Werkstücke 2 durch den Greifer 3 in Richtung ihrer Längsachse über das Anschlagteil 14 hinweg bewegt, bis sie auf der gegenüberliegenden Seite durch die oberen Halteelemente 11 freigegeben werden und danach aus dem Werkstückmagazin herausgehoben werden können.

Figur 5 zeigt perspektivisch eine Teilansicht einer Werkzeugmaschine 1 mit einem Werkstück 2, das gerade durch den Greifer 3 an zwei gegenüberliegende Spannfutter 8 übergeben wird. Der Greifer 3 ist dabei in der Werkzeugspindel der Werkzeugmaschine eingespannt, wozu der Greifer 3 mit entsprechenden Verbindungsmitteln ausgestattet ist, die in ein Werkzeugspannfutter der Werkzeugspindel passen. Dies hat den Vorteil, dass der Aufwand für einen separaten Greiferarm bzw. einen Greiferroboter eingespart werden kann. Das Werkstückmagazin 9 ist auf dem Reitstock rechts im Bild angeordnet. So ist das Werkstückmagazin 9 für den Greifer 3 auf kurzem Verfahrweg erreichbar.

### Bezugszeichenliste

- 1: Werkzeugmaschine
- 2: Werkstück
- 3: Greifer
- 4: Backen
- 5: Kontaktflächen
- 6: Ausnehmung
- 7: Kante
- 8: Spannfutter
- 9: Werkstückmagazin
- 10: Tragteile
- 11: obere Halteelemente
- 12: untere Halteelemente
- 13: Stützelemente
- 14: Anschlagteil

## Patentansprüche

1. Verfahren zum Handhaben von prismatischen Werkstücken (2) mit einem rhomboidförmigen Querschnitt auf einer Werkzeugmaschine (1) mit mindestens einem Spannfutter (8) für die Werkstücke (2), mit einem Werkstückmagazin (9) und mit einem Greifer (3) für die Werkstücke (2), wobei das Spannfutter (8) vier konvex gewölbte Kontaktflächen für die Werkstücke hat, die paarweise aufeinander zu und voneinander weg bewegbar sind, **dadurch gekennzeichnet, dass** der Greifer (3) vier konvex gewölbte Kontaktflächen (5) für die Werkstücke (2) hat, die paarweise aufeinander zu und voneinander weg bewegbar sind, wobei der Abstand und die Form bei einem Paar der Kontaktflächen des Greifers (3) gleich sind wie der Abstand und die Form bei einem Paar der Kontaktflächen (5) des Spannfutters (8), dass der Greifer (3) ein Werkstück (2) im Werkstückmagazin (9) derart ergreift, dass sich zwischen jedem Paar der Kontaktflächen (5) jeweils eine Längskante (7) des Werkstücks (2) befindet und dass der Greifer (3) das ergriffene Werkstück (2) aus dem Werkstückmagazin (9) entnimmt und dem Spannfutter (8) übergibt, derart, dass sich zwischen jedem Paar der Kontaktflächen (5) des Spannfutters (8) jeweils eine Längskante (7) des Werkstücks (2) befindet.

2. Verfahren nach Anspruch 1, **dadurch gekennzeichnet, dass** das Werkstückmagazin (9) Halteelemente (11, 12) hat, welche jedes Werkstück (2) in einer definierten Position und Orientierung im Werkstückmagazin (9) halten.

3. Verfahren nach Anspruch 2, **dadurch gekennzeichnet, dass** die Halteelemente (11, 12) für jedes Werkstück vier konvex gewölbten Kontaktflächen haben, die paarweise angeordnet sind und die Werkstücke (2) im Bereich einer Stirnseite der Werkstücke derart halten, dass sich zwischen jedem Paar der Kontaktflächen jeweils eine Längskante (7) des Werkstücks befindet, wobei bei jedem Paar der Abstand und die Form der Kontaktflächen dem Abstand und der Form der Kontaktflächen des Greifers und des Spannfutters entsprechen.

4. Verfahren nach Anspruch 3, **dadurch gekennzeichnet, dass** der Abstand der Paare der Kontaktflächen im Werkstückmagazin (9) voneinander so ist, dass die Werkstücke (2) mit Spiel gehalten werden.

5. Verfahren nach Anspruch 4, **dadurch gekennzeichnet, dass** der Greifer (3) nach dem Ergreifen des Werkstücks (2) im Werkstückmagazin (9) zunächst eine Bewegung in Richtung rechtwinklig zur Längsachse des Werkstücks (2) ausführt, um das Werkstück (2) über ein Anschlagteil (14) zu heben, das im Bereich der gegenüberliegenden Stirnseite des Werkstücks (2) im Werkstückmagazin (9) angeordnet ist.

6. Verfahren nach einem der vorangehenden Ansprüche, **dadurch gekennzeichnet, dass** der Greifer in einer Werkzeugspindel der Werkzeugmaschine (1) aufgenommen wird.

7. Verfahren nach einem der vorangehenden Ansprüche, **dadurch gekennzeichnet, dass** das Werkstückmagazin auf einem Reitstock der Werkzeugmaschine (1) angeordnet wird.

8. Werkzeugmaschine zum Durchführen des Verfahrens nach einem der Ansprüche 1 bis 7, mit mindestens einem Spannfutter (8) für die Werkstücke (2), mit einem Werkstückmagazin (9) und mit einem Greifer (3) für die Werkstücke (2), wobei das Spannfutter (8) vier konvex gewölbte Kontaktflächen für die Werkstücke hat, die paarweise aufeinander zu und voneinander weg bewegbar sind, **dadurch gekennzeichnet, dass** der Greifer (3) vier konvex gewölbte Kontaktflächen (5) für die Werkstücke (2) hat, die paarweise aufeinander zu und voneinander weg bewegbar sind, wobei der Abstand und die Form bei einem Paar der Kontaktflächen des Greifers (3) gleich sind wie der Abstand und die Form bei einem Paar der Kontaktflächen (5) des Spannfutters (8).

9. Werkzeugmaschine nach Anspruch 8, **dadurch gekennzeichnet, dass** das Werkstückmagazin (9) Halteelemente (11, 12) hat, die dazu bestimmt sind, jedes Werkstück (2) in einer definierten Position und Orientierung im Werkstückmagazin (9) zu halten.

10. Werkzeugmaschine nach Anspruch 9, **dadurch gekennzeichnet, dass** die Halteelemente (11, 12) für jedes Werkstück vier konvex gewölbten Kontaktflächen haben, die paarweise angeordnet sind, um die Werkstücke (2) im Bereich einer Stirnseite der Werkstücke derart zu halten, dass sich zwischen jedem Paar der Kontaktflächen jeweils eine Längskante (7) eines Werkstücks befindet, wobei bei jedem Paar der Abstand und die Form der Kontaktflächen dem Abstand und der Form der Kontaktflächen des Greifers und des Spannfutters entsprechen.

11. Werkzeugmaschine nach Anspruch 10, **dadurch gekennzeichnet, dass** der Abstand der Paare der Kontaktflächen im Werkstückmagazin (9) voneinander so ist, dass die Werkstücke (2) mit Spiel gehalten werden.

12. Werkzeugmaschine nach einem der Ansprüche 8 bis 11, **dadurch gekennzeichnet, dass** der Greifer mit Verbindungsmitteln ausgestattet ist, die es gestatten, den Greifer (3) in einer Werkzeugspindel der Werkzeugmaschine (1) aufzunehmen.

13. Werkzeugmaschine nach einem der Ansprüche 8 bis 12, **dadurch gekennzeichnet, dass** das Werkstückmagazin (9) auf einem Reitstock der Werkzeugmaschine (1) angeordnet ist.

## Claims

1. Method for handling prismatic workpieces (2) having a rhomboidal cross section on a machine tool (1) having at least one clamping chuck (8) for the workpieces (2), having a workpiece magazine (9) and having a gripper (3) for the workpieces (2), wherein the clamping chuck (8) has four convexly curved contact faces for the workpieces, which are movable towards and away from one another in pairs, **characterized in that** the gripper (3) has four convexly curved contact faces (5) for the workpieces (2), which are movable towards and away from one another in pairs, wherein the spacing and the shape of one pair of contact faces of the gripper (3) are identical to the spacing and the shape of one pair of the contact faces (5) of the clamping chuck (8), **in that** the gripper (3) grasps a workpiece (2) in the workpiece magazine (9) such that a respective longitudinal edge (7) of the workpiece (2) is located between each pair of contact faces (5), and **in that** the gripper (3) removes the grasped workpiece (2) from the workpiece magazine (9) and transfers it to the clamping chuck (8) such that a respective longitudinal edge (7) of the workpiece (2) is located between each pair of contact faces (5) of the clamping chuck (8).

2. Method according to Claim 1, **characterized in that** the workpiece magazine (9) has holding elements (11, 12) which hold each workpiece (2) in a defined position and orientation in the workpiece magazine (9).

3. Method according to Claim 2, **characterized in that** the holding elements (11, 12) have four convexly curved contact faces for each workpiece, which are arranged in pairs and hold the workpieces (2) in the region of an end side of the workpieces such that a respective longitudinal edge (7) of the workpiece is located between each pair of contact faces, wherein the spacing and the shape of the contact faces of each pair correspond to the spacing and the shape of the contact faces of the gripper and of the clamping chuck.

4. Method according to Claim 3, **characterized in that** the spacing of the pairs of contact faces in the workpiece magazine (9) from one another is such that the workpieces (2) are held with play.

5. Method according to Claim 4, **characterized in that** the gripper (3), after grasping the workpiece (2) in the workpiece magazine (9), first of all carries out a movement in a direction at right angles to the longitudinal axis of the workpiece (2) in order to lift the workpiece (2) over a stop part (14) which is arranged in the region of the opposite end side of the workpiece (2) in the workpiece magazine (9).

6. Method according to one of the preceding claims, **characterized in that** the gripper is accommodated in a tool spindle of the machine tool (1).

7. Method according to one of the preceding claims, **characterized in that** the workpiece magazine is arranged on a tailstock of the machine tool (1).

8. Machine tool for carrying out the method according to one of Claims 1 to 7, having at least one clamping chuck (8) for the workpieces (2), having a workpiece magazine (9) and having a gripper (3) for the workpieces (2), wherein the clamping chuck (8) has four convexly curved contact faces for the workpieces, which are movable towards and away from one another in pairs, **characterized in that** the gripper (3) has four convexly curved contact faces (5) for the workpieces (2), which are movable towards and away from one another in pairs, wherein the spacing and the shape of one pair of contact faces of the gripper (3) are identical to the spacing and the shape of one pair of the contact faces (5) of the clamping chuck (8).

9. Machine tool according to Claim 8, **characterized in that** the workpiece magazine (9) has holding elements (11, 12) which are intended to hold each workpiece (2) in a defined position and orientation in the workpiece magazine (9).

10. Machine tool according to Claim 9, **characterized in that** the holding elements (11, 12) have four convexly curved contact faces for each workpiece, which are arranged in pairs in order to hold the workpieces (2) in the region of an end side of the workpieces such that a respective longitudinal edge (7) of a workpiece is located between each pair of contact faces, wherein the spacing and the shape of the contact faces of each pair correspond to the spacing and the shape of the contact faces of the gripper and of the clamping chuck.

11. Machine tool according to Claim 10, **characterized in that** the spacing of the pairs of contact faces in the workpiece magazine (9) from one another is such that the workpieces (2) are held with play.

12. Machine tool according to one of Claims 8 to 11, **characterized in that** the gripper is equipped with connecting means which allow the gripper (3) to be accommodated in a tool spindle of the machine tool (1).

13. Machine tool according to one of Claims 8 to 12, **characterized in that** the workpiece magazine (9) is arranged on a tailstock of the machine tool (1).

## Revendications

1. Procédé de manipulation de pièces prismatiques (2) de section transversale rhomboïdale sur une machine-outil (1) présentant au moins un mandrin de serrage (8) pour les pièces (2), un magasin (9) à pièces et un dispositif (3) de saisie des pièces (2),
le mandrin de serrage (8) possédant pour les pièces quatre surfaces de contact à courbure convexe qui peuvent être rapprochées et éloignées l'une de l'autre deux à deux,
**caractérisé en ce que**
le dispositif de saisie (3) présente pour les pièces (2) quatre surfaces de contact (5) à courbure convexe qui peuvent être rapprochées et éloignées l'une de l'autre deux à deux, la distance et la forme d'une paire de surfaces de contact du dispositif de saisie (3) étant identiques à la distance et à la forme d'une paire de surfaces de contact (5) du mandrin de serrage (8),
**en ce que** le dispositif de saisie (3) saisit une pièce (2) dans le magasin (9) à pièces de telle sorte qu'une arête longitudinale (7) de la pièce (2) soit située entre chaque paire de surfaces de contact (5) et
**en ce que** le dispositif de saisie (3) prélève dans le magasin (9) à pièces la pièce (2) qu'il a saisie et la transfère au mandrin de serrage (8) de telle sorte que chaque arête longitudinale (7) de la pièce (2) soit située entre chaque paire de surfaces de contact (5) du mandrin de serrage (8).

2. Procédé selon la revendication 1, **caractérisé en ce que** le magasin (9) à pièces possède des éléments de maintien (11, 12) qui maintiennent chaque pièce (2) en une position et une orientation définies dans le magasin (9) à pièces.

3. Procédé selon la revendication 2, **caractérisé en ce que** les éléments de maintien (11, 12) de chaque pièce possèdent quatre surfaces de contact à courbure convexe disposées deux à deux et maintiennent les pièces (2) au niveau du côté frontal des pièces de telle sorte que chaque arête longitudinale (7) de la pièce soit située entre chaque paire de surfaces de contact, la distance et la forme des surfaces de contact de chaque paire correspondant à la distance et à la forme des surfaces de contact du dispositif de saisie et du mandrin de serrage.

4. Procédé selon la revendication 3, **caractérisé en ce que** la distance mutuelle entre les paires de surfaces de contact dans le magasin (9) à pièces est telle que les pièces (2) sont maintenues avec un jeu.

5. Procédé selon la revendication 4, **caractérisé en ce qu'**après la saisie de la pièce (2) dans le magasin (9) à pièces, le dispositif de saisie (3) exécute d'abord un déplacement dans une direction perpendiculaire à l'axe longitudinal de la pièce (2), pour relever la pièce (2) au-dessus d'une partie de butée (14) disposée au niveau du côté frontal opposé de la pièce (2) dans le magasin (9) à pièces.

6. Procédé selon l'une des revendications précédentes, **caractérisé en ce que** le dispositif de saisie est reçu dans une broche à outils de la machine-outil (1).

7. Procédé selon l'une des revendications précédentes, **caractérisé en ce que** le magasin à pièces est disposé sur une contre-poupée de la machine-outil (1).

8. Machine-outil destinée à mettre à oeuvre le procédé selon l'une des revendications 1 à 7, et présentant au moins un mandrin de serrage (8) pour les pièces (2), un magasin (9) à pièces et un dispositif (3) de saisie des pièces (2), le mandrin de serrage (8) présentant pour les pièces quatre surfaces de contact à courbure convexe, ces surfaces pouvant être rapprochées et éloignées l'une de l'autre deux à deux,
**caractérisée en ce que**
le dispositif de saisie (3) présente pour les pièces (2) quatre surfaces de contact (5) à courbure convexe qui peuvent être rapprochées et éloignées l'une de l'autre deux à deux, la distance et la forme d'une paire de surfaces de contact du dispositif de saisie (3) étant identiques à la distance et à la forme d'une paire de surfaces de contact (5) du mandrin de serrage (8).

9. Machine-outil selon la revendication 8, **caractérisée en ce que** le magasin (9) à pièces possède des éléments de maintien (11, 12) conçus pour maintenir chaque pièce (2) dans le magasin (9) à pièces dans une position et une orientation définies.

10. Machine-outil selon la revendication 9, **caractérisée en ce que** les éléments de maintien (11, 12) de chaque pièce possèdent quatre surfaces de contact à courbure convexe disposées deux à deux et maintiennent les pièces (2) au niveau du côté frontal des pièces de telle sorte que chaque arête longitudinale (7) de la pièce soit située entre chaque paire de surfaces de contact, la distance et la forme des surfaces de contact de chaque paire correspondant à la distance et à la forme des surfaces de contact du dispositif de saisie et du mandrin de serrage.

11. Machine-outil selon la revendication 10, **caractérisée en ce que** la distance mutuelle entre les paires de surfaces de contact dans le magasin (9) à pièces est telle que les pièces (2) sont maintenues avec un jeu.

12. Machine-outil selon l'une des revendications 8 à 11, **caractérisée en ce que** le dispositif de saisie est équipé de moyens de liaison qui permettent de reprendre le dispositif de saisie (3) dans une broche-outil de la machine-outil (1).

13. Machine-outil selon l'une des revendications 8 à 12, **caractérisée en ce que** le magasin (9) à pièces est disposé sur une contre-poupée de la machine-outil (1).
